# EUROPEAN PATENT APPLICATION

(11) **EP 4 844 482 A1**
(43) Date of publication of application: **25.11.2026**
(21) Application number: 25215992.6
(22) Date of filing: 14.11.2025
(51) Int. Cl.: G03B 21/16, F21S 10/00, F21V 29/67

(54) **AMBIENT LAMP AND OPTICAL STRUCTURE THEREOF**

(30) Priority: 23.05.2025 US 202519216763
(71) Applicant: Zhongshan Yong Qi Electronic Co., Ltd., Zhongshan, Guangdong 528400 (CN)
(72) Inventor: JI, Shaoqi, Zhongshan, 528400 (CN)
(74) Representative: Metida

(57) **Abstract**

An optical structure includes an optical housing, a light source assembly, a lens assembly, and a first heat-dissipation fan. The optical housing includes at least one air inlet. The light source assembly is arranged in the optical housing and includes a light source and a display screen arranged along an optical path direction. The lens assembly is arranged on a side of the display screen opposite to the light source and configured to project light out from the light source assembly onto a carrier to form a projected image. The first heat-dissipation fan is arranged a side of the light source assembly opposite to the at least one inlet and configured to allow air from the at least one air inlet to be provided to the first heat-dissipation fan through the light source assembly to take away heat from the light source assembly.

## Description

### FIELD

The subject matter herein generally relates to ambient lamp technologies, especially to an ambient lamp and an optical structure of the ambient lamp.

### BACKGROUND

Ambient lamps can project preset ambient scenes such as starry skies, galaxies, and sunset glows onto ceilings or walls, simulating realistic ambient effects. When paired with dynamic light and shadow technologies, they can create a dreamy and romantic atmosphere, making them highly popular among people. However, improving projection effects of ambient lamps to bring better projection experiences for people is a significant technical challenge in the industry.

### SUMMARY

In view of the deficiencies of existing technologies, the present invention aims to provide an optical structure and an ambient lamp.

In order to achieve above objects, the present application adopts following technological solutions:

An optical structure of an ambient lamp provided by an embodiment of the present application includes an optical housing, a light source assembly, a lens assembly, and a first heat-dissipation fan. The optical housing includes at least one air inlet. The light source assembly is arranged in the optical housing and includes a light source and a display screen arranged along an optical path direction. The lens assembly is arranged on a side of the display screen opposite to the light source and configured to project light out from the light source assembly onto a carrier to form a projected image. The first heat-dissipation fan is arranged a side of the light source assembly opposite to the at least one inlet and configured to allow air from the at least one air inlet to be provided to the first heat-dissipation fan through the light source assembly to take away heat from the light source assembly.

The present invention further provides an ambient lamp including a main housing and the optical structure.

The present invention has following beneficial effects: by providing at least one air inlet and a first heat-dissipation fan, the air from the at least one air inlet is channeled through the light source assembly to the first heat-dissipation fan to carry away the heat generated by the light source assembly. The present invention can prevent the phenomenon where excessive heat in the optical structure adversely affects imaging performance and service life, thereby enhancing the imaging performance and extending the service life of the ambient lamp and its optical structure.

### BRIEF DESCRIPTION OF THE DRAWINGS

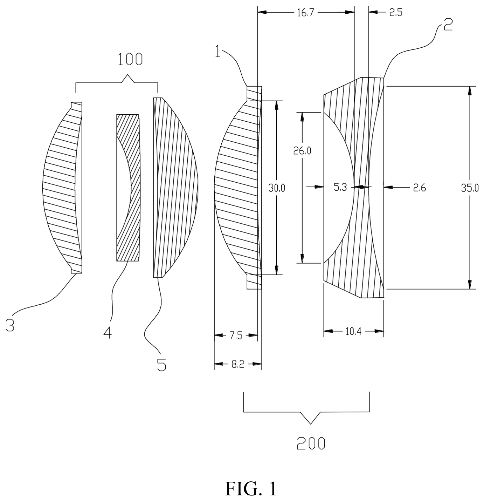

FIG. 1 is a schematic structural diagram of a lens module of an ambient lamp according to a first embodiment of the present invention.
FIG. 2 is a schematic structural diagram showing a basic optical path of a light source assembly of an ambient lamp according to a second embodiment of the present invention.
FIG. 3 is an exploded view of the light source assembly of the ambient lamp in the second embodiment of the present invention.
FIG. 4 is a schematic structural diagram of a Fresnel lens used in a light source assembly of the ambient lamp in the second embodiment of the present invention.
FIG. 5 is a schematic structural diagram of a concentrating cup used in the light source assembly of the ambient lamp in the second embodiment of the present invention.
FIG. 6 is a schematic structural diagram of a light source used in the light source assembly of the ambient lamp in the second embodiment of the present invention.
FIGS. 7-20 are schematic structural diagrams of light sources used in the light source assemblys in variant embodiments of the second embodiment of the present invention.
FIG. 21 is a schematic structural diagram showing assembling of a fixed lens barrel and a moveable lens barrel in an optical housing of the ambient lamp in the second embodiment of the present invention.
FIG. 22 is a schematic structural diagram of the optical housing of the ambient lamp in the second embodiment of the present invention.
FIG. 23 is a schematic structural diagram of the optical housing of the ambient lamp in the second embodiment of the present invention from another view.
FIG. 24 is an exploded view of a first heat-dissipation fan in the light source assembly of the ambient lamp provided in the second embodiment of the present invention.
FIG. 25 is an exploded view of the first heat-dissipation fan in the light source assembly of the ambient lamp provided in the second embodiment of the present invention from another view.
FIG. 26 is a cross-sectional view of the light source assembly of the ambient lamp provided in the second embodiment of the present invention.
FIG. 27 is a cross-sectional view of the light source assembly of the ambient lamp provided in the second embodiment of the present invention from another view.
FIG. 28 is a schematic structural diagram of a heat-dissipation member of the light source assembly of the ambient lamp provided in the second embodiment of the present invention.
FIG. 29 is an exploded view of a light source assembly of an ambient lamp according to a third embodiment of the present invention.
FIG. 30 is an exploded view of the light source assembly of the ambient lamp in the third embodiment of the present invention from another view.
FIG. 31 is an exploded view of a light source assembly of an ambient lamp according to a fourth embodiment of the present invention.
FIG. 32 is an exploded view of the light source assembly of the ambient lamp in the fourth embodiment of the present invention from another view.
FIG. 33 is an exploded view of a light source assembly of an ambient lamp according to a fifth embodiment of the present invention.
FIG. 34 is an exploded view of the light source assembly of the ambient lamp in the fifth embodiment of the present invention from another view.
FIG. 35 is an exploded view of a light source assembly of an ambient lamp according to a sixth embodiment of the present invention.
FIG. 36 is an exploded view of a light source assembly of an ambient lamp according to a seventh embodiment of the present invention.
FIG. 37 is an exploded view of a light source assembly of an ambient lamp according to an eighth embodiment of the present invention.
FIG. 38 is an exploded view of a light source assembly of an ambient lamp according to a nineth embodiment of the present invention.
FIG. 39 is an exploded view of a light source assembly of an ambient lamp according to a variant embodiment of the nineth embodiment of the present invention.
FIG. 40 is a schematic structural diagram of an ambient lamp according to a tenth embodiment of the present invention.
FIG. 41 is a schematic structural diagram of the ambient lamp in FIG. 40 from another view.
FIG. 42 is an exploded view of the ambient lamp in FIG. 40.
FIG. 43 is an exploded view of the ambient lamp in FIG. 40 from another view.
FIG. 44 is a schematic diagram showing separation of a main housing and a base of the ambient lamp shown in FIG. 40.
FIG. 45 is a partial sectional view illustrating assembly of the main housing and the base of the ambient lamp shown in FIG. 40.
FIG. 46 is a schematic diagram of the ambient lamp shown in FIG. 40 from another angle.
FIG. 47 is a schematic diagram illustrating a projection ratio of the ambient lamp shown in FIG. 40.
FIG. 48 is a schematic diagram showing a projected image of the ambient lamp shown in FIG. 40.
FIG. 49 is a schematic diagram explaining a range of the projection ratio for the ambient lamp shown in FIG. 40.

### DETAILED DESCRIPTION

The present invention is detailed described in conjunction with attached drawings.

### Embodiment 1

A lens assembly provided by an embodiment of the present invention is arranged on a side of a light source assembly and includes a projection lens module 100 and a distortion lens module 200. The projection lens module 100 is configured to process preset projected source light emitted by the light source assembly to generate preset ambient imaging light. The distortion lens module 200 is configured to expand a projection range of the preset ambient imaging light and induce distortion in part of the preset ambient imaging light in the edge regions, thereby creating a preset ambient imaging scene with blurred edges.

In the lens assembly of the ambient light in this embodiment, after the imaging scene projected by the projection lens module sequentially passes through the distortion lens module, the scene size can be enlarged while introducing curved distortion at the scene edges. The distorted scene boundaries become blurred, with the sense of boundary almost disappearing, resulting in a more aesthetically pleasing and immersive viewing experience. This is particularly effective when displaying ambient scenes such as starry skies, offering a high level of user experience.

Specifically, the projection lens module 100 and the distortion lens module 200 are coaxially arranged. The distortion lens module incudes a plano-convex lens 1 and a biconcave lens 2. The plano-convex lens 1 is positioned adjacent to the projection lens module 100, while the biconcave lens 2 is arranged on a side of the plano-convex lens 1 opposite to the projection lens module 100. A side of the plano-convex lens 1 facing the projection lens module 100 is convex, and the opposite side is flat. Both surfaces of the biconcave lens 2 are concave.

Furthermore, a concave curvature on the side of the biconcave lens 2 that receives the preset projected source light is greater than a concave curvature on the side that emits the preset ambient imaging light. Additionally, a diameter of the projected pattern along an optical axis L of the biconcave lens 2 on the side receiving the preset projected source light is smaller than that on the side emitting the preset ambient imaging light.

In this embodiment, the plano-convex lens 1 has a total thickness of 8.2 mm, with a convex surface diameter of 30 mm. The distance between the optical center of the plano-convex lens 1 and the center of its convex surface is 7.5 mm. For the biconcave lens 2, the concave surface facing the plano-convex lens 1 has a diameter of 26 mm and a depth of 5.3 mm, while the opposite concave surface has a diameter of 35 mm and a depth of 2.6 mm. The distance between the centers of the two concave surfaces of the biconcave lens 2 is 2.5 mm. The distance between the center of the concave surface facing the plano-convex lens 1 and the optical center of the plano-convex lens 1 is 16.7 mm.

More specifically, the total thickness of the biconcave lens 2 is 10.4 mm. It should be noted that the total thickness of the biconcave lens 2 can range from 8.4 mm to 12.4 mm.

In this embodiment, the projection lens module 100 includes a first convex lens 3, a plano-concave lens 4, and a second convex lens 5. The convex surface of the first convex lens 3 faces the light source, the concave surface of the plano-concave lens 4 faces the flat surface of the first convex lens 3, and the convex surface of the second convex lens 5 faces the convex surface of the plano-convex lens 1 in the distortion lens module 200.

In the aforementioned configuration, the imaging scene projected by the projection lens module 100 sequentially passes through the plano-convex lens and biconcave lens of the distortion lens module 200. While the scene size can be enlarged, curved distortion occurs at the scene edges, resulting in blurred boundaries with the sense of boundary nearly disappearing. This creates a starry or night sky effect in dark environments, ultimately achieving a blurred image boundary without compromising the clarity of the central image.

### Embodiment 2

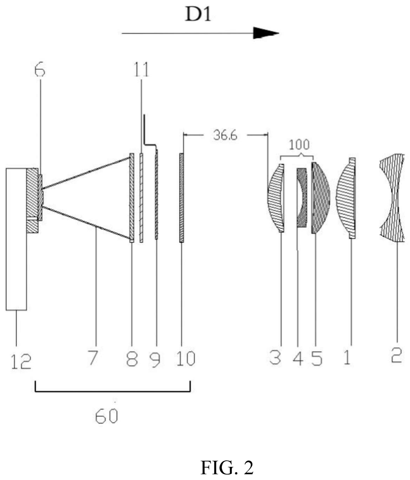

This embodiment provides a light source assembly for an ambient lamp. As shown in FIGS. 2 to 3, the light source assembly includes a light source assembly 60 and the lens assembly of the first embodiment. The light source assembly 60 includes a light source 6, a light-converging cup 7, a first lens 8, a display screen 9, and a second lens 10, which are coaxially arranged in sequence along the direction of light emission. In the lens assembly, the projection lens module 100 is positioned between the distortion lens module 200 and the light source assembly, with the projection lens module 100 facing the second lens 10. The light source 6 is arranged at one end of the light-converging cup 7, and the first lens 8 is arranged at the other end of the light-converging cup 7. The first lens 8 and the second lens 10 are located on either side of the display screen 9, respectively.

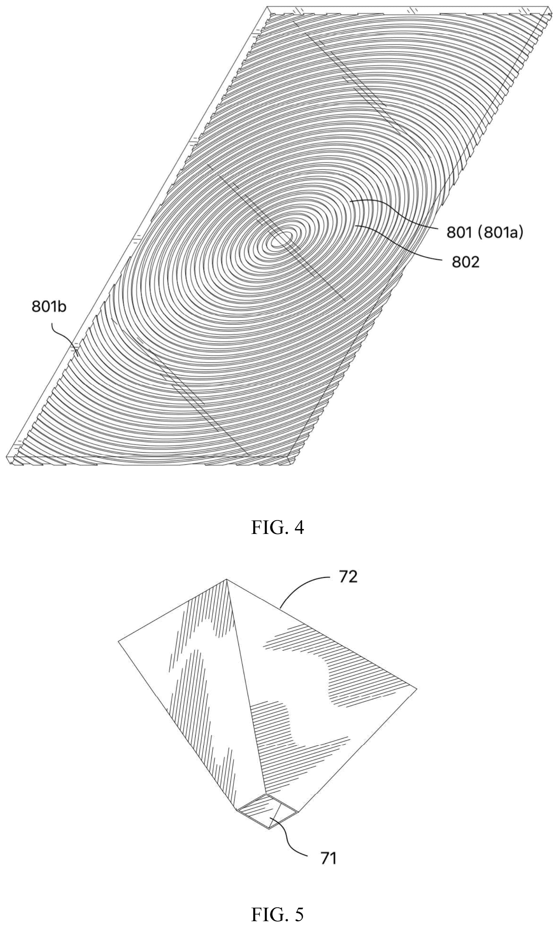

Specifically, both the first lens 8 and the second lens 10 are Fresnel lenses. As shown in FIG. 4, a Fresnel lens includes a central point and multiple circular protrusions 801 arranged sequentially in rings around the central point. An annular groove 802 is formed between two adjacent circular protrusions 801. It can be understood that the width of the circular protrusions 801 falls within a certain range. The Fresnel lens has a rectangular shape. The circular protrusions in the central region are complete circular protrusions 801a, while some of the circular protrusions in the peripheral region are divided into two relatively positioned arc-shaped protrusions 801b.

Furthermore, in this embodiment, a heat-insulating glass 11 is further provided between the first lens 8 and the display screen 9. It can be understood that the heat-insulating glass 11 can isolate or reduce heat transfer between the display screen 9 and the light source 6, which is beneficial for improving the service life and imaging effect of the light source assembly. However, in other embodiments, the heat-insulating glass 11 can be omitted.

Furthermore, in this embodiment, the distance between the center of the convex surface of the first convex lens 3 in the projection lens module 100 and the surface of the second lens 10 facing the projection lens module 100 is 23-36.6 mm; specifically, it can be 36.6 mm. It can be understood that by setting the distance between the center of the convex surface of the first convex lens 3 and the surface of the second lens 10 facing the projection lens module 100 within a preset range, the imaging quality can be ensured, and the user experience can be improved.

As shown in FIG. 5, the light-converging cup 7 has a conical structure with a gradually increasing diameter along an optical path direction D1. The light-converging cup 7 includes a light inlet 71 and a light outlet 72. A size of a light-emitting area 63 of the light source 6 is adapted to and corresponds to a size of the light inlet 71, and is arranged corresponding to the light inlet 72, so that substantially all the light emitted by the light source 6 enters the light-converging cup 7 through the light inlet 71, thereby improving a light utilization efficiency.

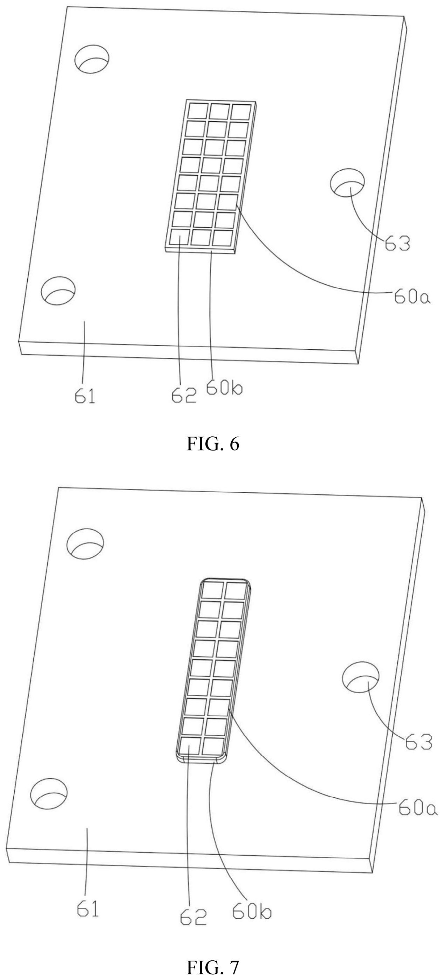

As shown in FIG. 6, the light source 6 includes a fixing plate 61, a substrate 60b, and multiple light-emitting elements 62 arranged on the substrate 60b. The multiple light-emitting elements 62 form a light-emitting area 60a. In this embodiment, a size of the substrate 60b is substantially equal to that of the light-emitting area 60a. The substrate 60b can be arranged inside the light inlet 71 so that the multiple light-emitting elements 62 are positioned in the light-converging cup 7. In this embodiment, the multiple light-emitting elements 62 are arranged in a matrix, such as a 4-by-6 matrix. The fixing plate 61 further has multiple first fixing holes 63 for fixing to other components (such as a heat-dissipation member 12). The multiple fixing holes 63 are arranged in a triangular pattern to achieve a relatively stable fixing effect.

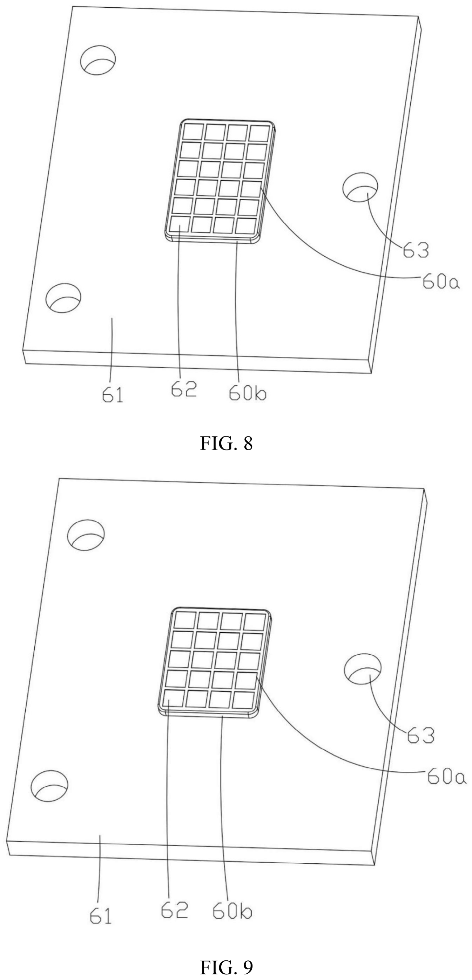

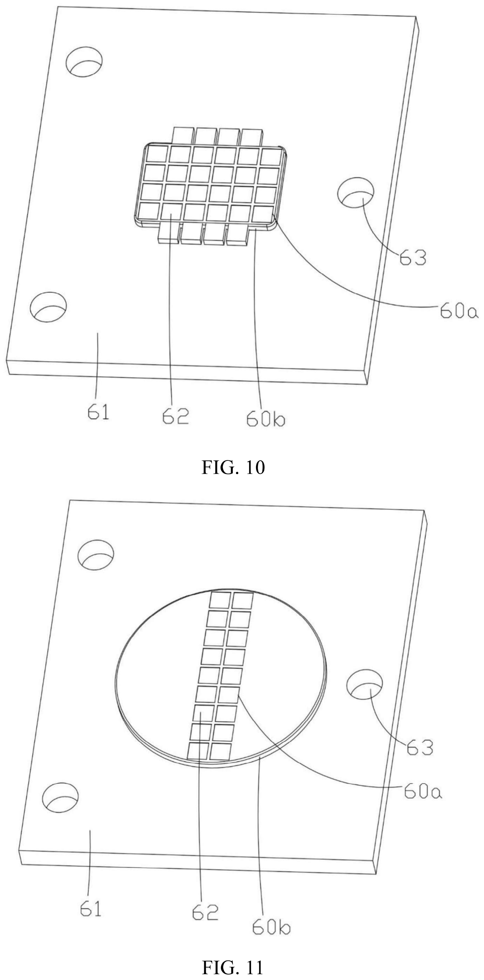

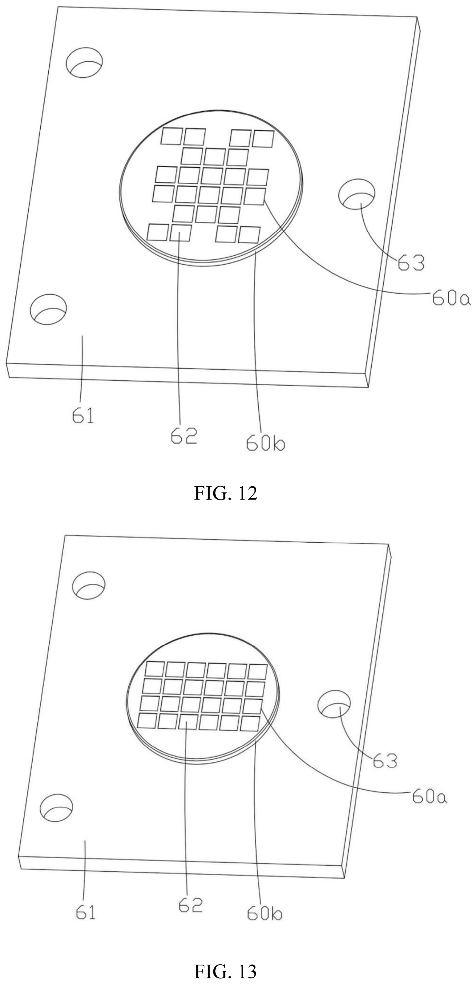

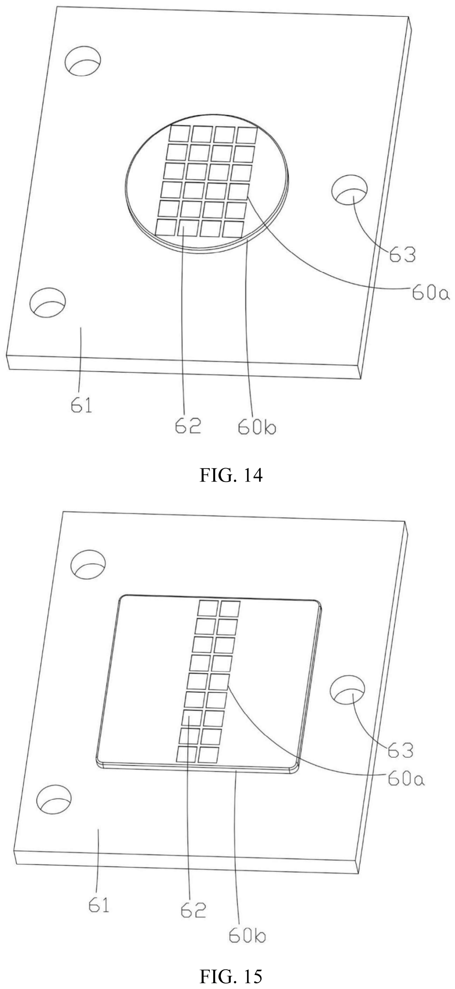

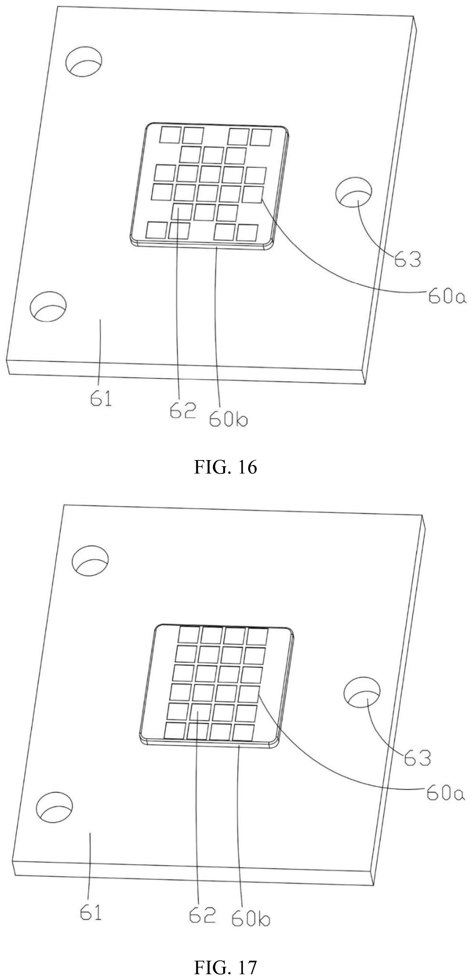

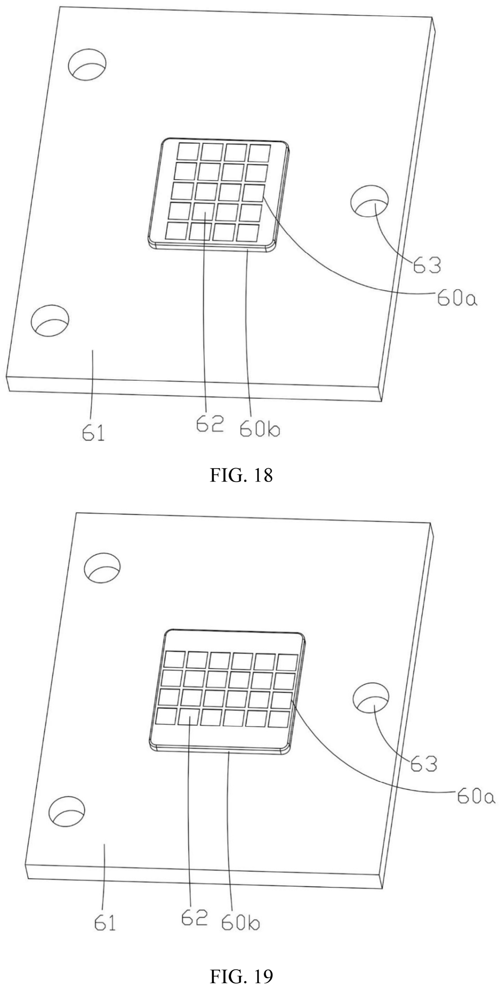

As shown in FIGS. 7 - 20, in some other embodiments, the size, length, and width of the matrix formed by the arrangement of the multiple light-emitting elements 62 can be adjusted according to actual needs, such as a 3-by-5 matrix, a 6-by-6 matrix, etc. The planar size of the substrate 60b can be larger than that of the light-emitting area 60a formed by arrangement of the multiple light-emitting elements 62. The shape of the substrate 60b is not limited to a square, a rectangle, a circle, or an ellipse. Generally, the shape of the substrate 60b can be consistent with that of the light inlet 71 of the light-converging cup 7, such as both being rectangular, which is beneficial for improving light utilization efficiency.

It is understandable that through the aforementioned light source assembly, the light emitted by the light source 6 sequentially passes through the light-converging cup 7, the first lens 8, the display screen 9, the second lens 10, the projection lens group 100, and the distortion lens group 200 before being projected onto a carrier to form an imaged picture.

In this embodiment, the light source 6 is further connected to a heat-dissipation member 12 configured to dissipate heat from the light source 6. Specifically, the heat-dissipation member 12 can be attached to the side of the light source 6 that is opposite to the light-converging cup 7, to conduct heat from the light source 6 to the periphery away from the light source assembly, thereby avoiding issues of excessive heat in the light source assembly that could affect the imaging quality and service life.

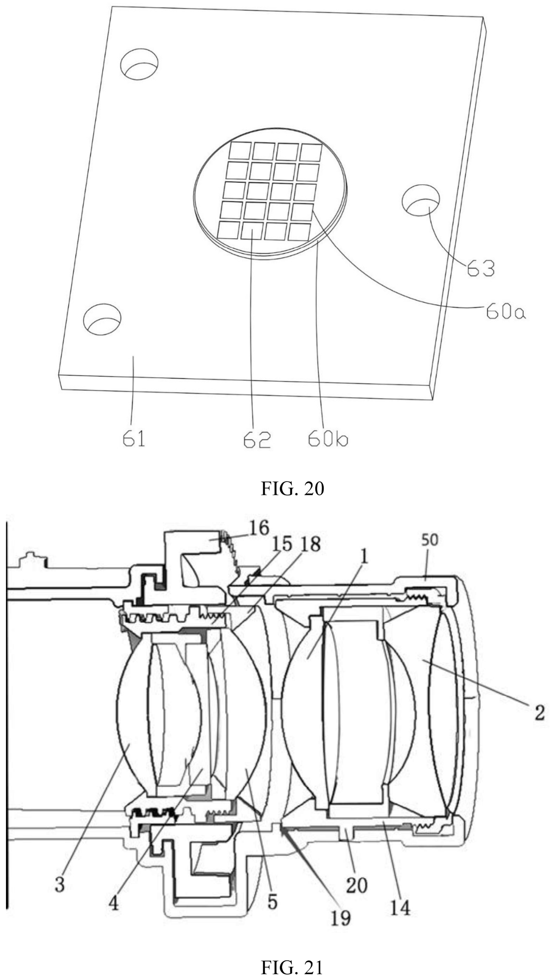

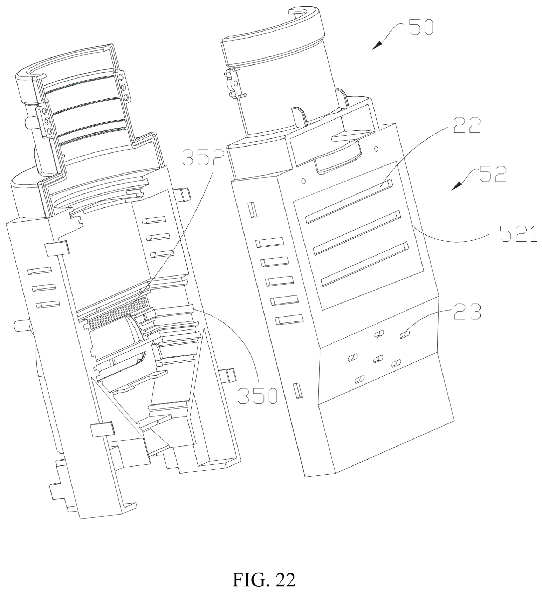

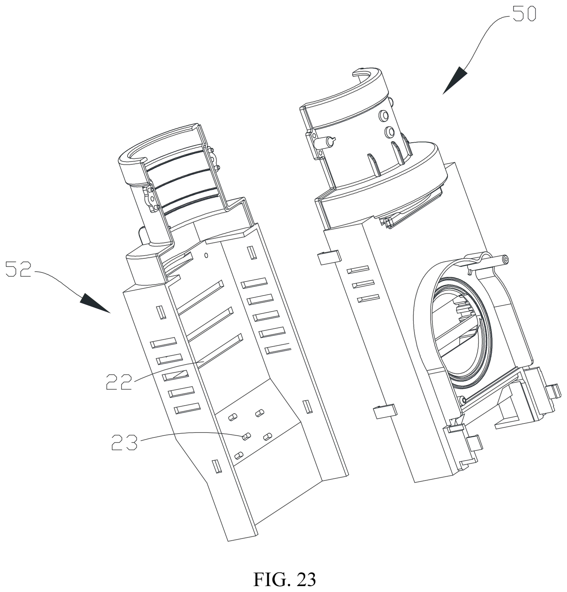

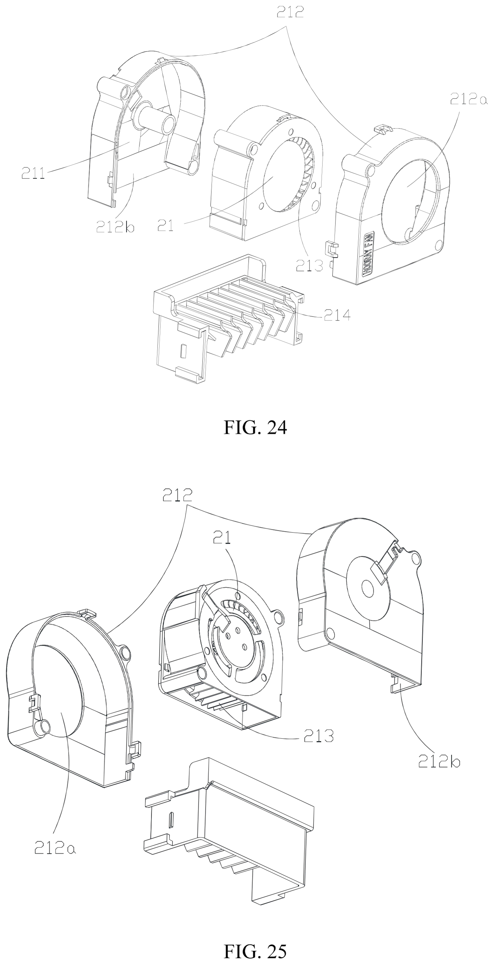

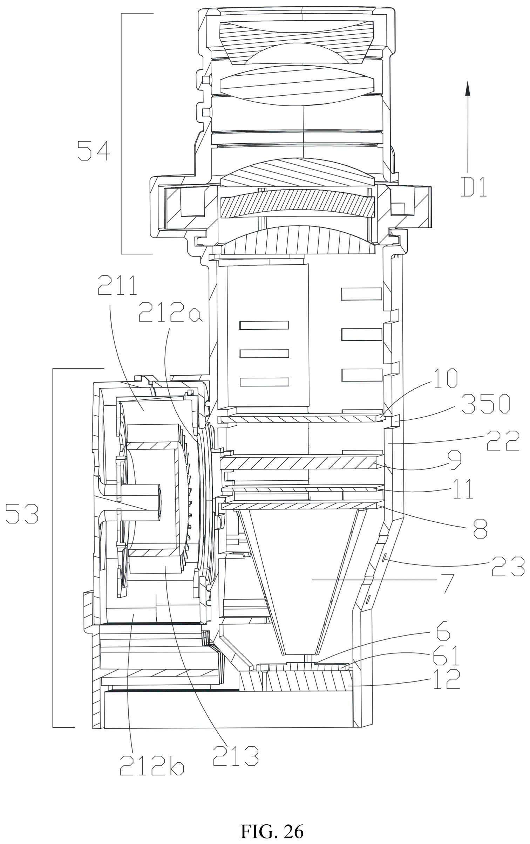

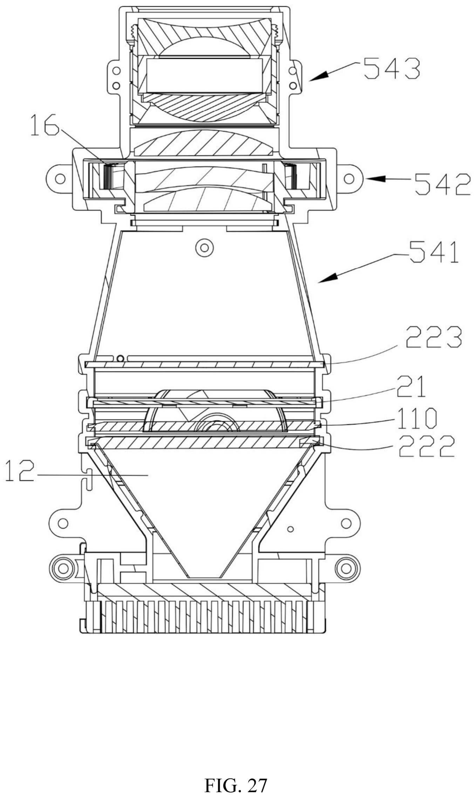

Furthermore, as shown in FIGS. 21-28, the light source assembly further includes an optical housing 50. Both the light source assembly 60 and the lens assembly 51 are arranged inside the optical housing 50. The optical housing 50 includes at least one air inlet 52. The light source assembly further includes a first heat-dissipation fan 21 located on the side of the light source assembly 60 that is opposite to the at least one air inlet 52. This arrangement allows air from the at least one air inlet 52 to pass through the gaps between adjacent components of the light source assembly 60 and to be directed to the first heat-dissipation fan 21 to dissipate heat from the light source assembly 60. It is understandable that by placing the first heat-dissipation fan on the side opposite to the at least one air inlet 52, a heat dissipation channel can be formed to dissipate heat from the light source assembly 60, thereby reducing the overall temperature of the light source assembly.

As mentioned above, this embodiment provides a light source assembly for an ambient light, which includes an optical housing 50, a light source assembly 60, and a first heat-dissipation fan 21. The optical housing 50 includes at least one air inlet 52. The light source assembly 60 is installed within the optical housing 50. The first heat-dissipation fan 21 is located on the side of the light source assembly 60 that is opposite to the at least one air inlet 52, allowing air from the at least one air inlet 52 to pass through the light source assembly 60 and to be directed to the first heat-dissipation fan 21 to dissipate heat from the light source assembly 60. This arrangement can prevent excessive heat in the light source assembly from affecting the imaging quality and service life, thereby improving the imaging quality and service life of the light source assembly for the ambient light.

The at least one air inlet 52 includes a first air inlet 22 and a second air inlet 23. The first air inlet 22 corresponds to the position between the heat-insulating glass 11 and the second lens 10, while the second air inlet 23 corresponds to the position of the light-converging cup 7. Specifically, the second air inlet 23 includes several air intake through-holes. It is understandable that the design of multiple air inlets is beneficial for improving the heat dissipation effect.

By placing the second air inlet 23 at the top of the optical housing 50, air enters through each of the air intake through-holes of the second air inlet 23 from above, circulates around the light-converging cup 7, and then enters the first heat-dissipation fan 21 from a lower side of the light-converging cup 7. The hot air is ultimately drawn away by the first heat-dissipation fan 21 located below, which can significantly dissipate heat from the light-converging cup 7 and the light source 6, thereby greatly improving the heat dissipation effect.

The optical housing 50 can include a first part 53 and a second part 54 connected sequentially along the optical path direction. The light source assembly 60 is arranged in the first part 53, while the lens assembly 51 is arranged in the second part 54. It is understandable that by using an integrated optical housing 50, the light source assembly 60 and the lens assembly 51 can be aligned and installed together, ensuring both the structural strength of the light source assembly and the alignment accuracy, thereby achieving better imaging quality.

The first part 53 has multiple first mounting slots 350, with the first lens 8, the display screen 9, and the second lens 10 each corresponding to one first mounting slot 350 for installation. The first mounting slots 350 can be sliding slots. The first part 53 is divided into an upper housing and a lower housing that are connected to each other. The first mounting slots 350 is arranged on the lower housing. When the upper housing is separated from the lower housing, the first lens 8, the display screen 9, and the second lens 10 can be slidably installed onto or removed from the lower housing corresponding to the first mounting slots 350. It is understandable that the arrangement of the aforementioned first mounting slots 350 can fix the first lens 8, the display screen 9, and the second lens 10 in predetermined positions, facilitating assembly of each component while also ensuring heat dissipation and imaging quality.

In this embodiment, the first mounting slot 350 adjacent to the first heat-dissipation fan 21 is further provided with dust-proof oil 352, which can adsorb dust and impurities, avoiding any impact on imaging.

As previously mentioned, the light-converging member 7 is conical with a gradually increasing diameter along the optical path direction D1. The shape of the part of the first part 53 where the light-converging member 7 is arranged is adapted to the light-converging member 7, ensuring not only their assembly but also making the design of the optical structure more compact, which is beneficial for miniaturization and lightweighting.

In this embodiment, the display screen 9 is substantially rectangular. Therefore, a cross-section of the light-converging member 7 perpendicular to the optical path direction D1 can be rectangular. That is, the shape of the display screen 9 is adapted to and comparable in size to the cross-sectional shape of the light-converging member 7 perpendicular to the optical path direction D1, which can also contribute to improving the light utilization efficiency of the light source assembly 60.

Furthermore, the distortion lens module 200 and the optical housing 50 are equipped with alignment and mating structures to facilitate their assembly. Specifically, the alignment and mating structures include, but are not limited to, alignment protrusions, grooves, labels, etc.

The at least one air inlet 52 is further provided with a dust-proof air intake membrane 521 to prevent dust and other debris from entering the interior of the optical structure and affecting the imaging quality. The dust-proof air intake membrane 521 can be a non-woven fabric with multiple irregular air intake gaps, adhered to the optical housing 50 using a colloid. It has advantages of low weight and good dust-proof air intake performance, but the specific material is not limited to the above.

In the optical structure of this embodiment, the air outlet direction of the first heat-dissipation fan 21 is oriented towards the heat-dissipation member 12, so that it can blow air towards the heat-dissipation member 12 to carry away its heat, further improving the heat dissipation effect.

Specifically, the heat-dissipation member 12 includes a heat dissipation substrate 12a that fixes the light source 6 and multiple cooling fins 12b connected to the side of the heat dissipation substrate 12a that is away from the light source 6. The multiple cooling fins 12b are spaced apart and extend to the air outlet of the first heat-dissipation fan 21, allowing the first heat-dissipation fan 21 to blow air into the gaps among the multiple cooling fins 12 to carry away the heat from the heat-dissipation member 12. The heat-dissipation member 12 may further include a second fixing hole 12c and a third fixing hole 12d. The second fixing hole 12c can be configured to fix the light source 6, while the third fixing hole 12d can be configured to fix the heat-dissipation member 12 onto the optical housing 50.

The first heat-dissipation fan 21 includes a fan housing 212 with an installation cavity 211 and fan blades 213 located within the installation cavity 211. The fan blades 213 can be turbine blades, and the direction of their fan shaft can be perpendicular to the optical path direction D1, allowing the fan blades 213 to guide the heat from the light source assembly 60 at the top towards the side where the light source 6 is located.

In this embodiment, the fan housing 212 further has a fan air inlet 212a facing the light source assembly 60 and a fan air outlet 212b. At the fan air outlet 212b, there are multiple air guide vanes 214. The air blown between the multiple air guide vanes 214 is directed towards the heat-dissipation member 12 in parallel, which can more uniformly and effectively carry away the heat from the light source 6 on the heat-dissipation member 12.

Additionally, the fan housing 212 can be snap-fitted onto the optical housing 50, facilitating the assembly and disassembly of the first heat-dissipation fan 21.

In this embodiment, the optical structure may further include at least one lens barrel. The projection lens module 100 can be installed within the at least one lens barrel and can move back and forth along the optical path direction D1 with the at least one lens barrel to adjust a projection focal length. However, it is necessary to ensure that there is always a distance between the distortion lens module 200 and the projection lens module 100 to ensure imaging.

Specifically, the at least one lens barrel may include a fixed lens barrel 14 and a movable lens barrel 15. The fixed lens barrel 14 is positioned in front of the movable lens barrel 15. The distortion lens module 200 is fixedly installed within the fixed lens barrel 14, while the projection lens module 100 is fixedly installed within the movable lens barrel 15. The movable lens barrel 15 can bring the projection lens module 100 to move back and forth to adjust the projection focal length. The back-and-forth movement of the at least one lens barrel along the optical path direction D1 can be automatically or manually adjusted.

In this embodiment, a focusing wheel 16 is sleeved on an exterior of the movable lens barrel 15, and the movement of the focusing wheel 16 can drive the movable lens barrel 15 to move back and forth. Specifically, the outer surface of the movable lens barrel 15 may be provided with external threads, while the inner surface of the focusing wheel 16 is provided with internal threads that match the external threads, which allows rotation of the focusing wheel 16 to drive the movable lens barrel 15 to bring the projection lens module 100 to move back and forth along the optical path direction D1 for focusing.

The front end of the optical housing 50 is provided with two focusing wheel protruding holes 17 configured to allow both sides of the focusing wheel 16 protrude therethrough to an exterior of the optical housing 50 respectively. With the aforementioned structure, when the focusing wheel 16 is turned, since it is restricted by the focusing wheel protruding holes 17 and cannot move back and forth, the movable lens barrel 15 is driven to move back and forth, which can then bring the projection lens module 100 to move back and forth to adjust the focal length.

Furthermore, in the optical housing 50, the second part 54 includes a first section 541, a second section 542, and a third section 543 connected sequentially along the optical path direction D1. The diameter of the first section 541 gradually decreases along the optical path direction D1. The diameter of the second section 542 is larger than that of the first section 541 and the third section 543, and the second section 542 has the focusing wheel protrusion holes 17 for exposing the focusing wheel 16. The projection lens module 100 is positioned on the focusing wheel 16. Such three-section arrangement of the second part 54 not only matches the optical path of the optical structure to ensure imaging but also contributes to the compactness of the overall design of the optical structure, reducing size and weight of the optical structure. Furthermore, through the focusing wheel 16 and the focusing wheel protrusion hole 17, manual or automatic focusing is also facilitated to ensure imaging effects.

More specifically, in this embodiment, the front end of the focusing wheel 16 is provided with a limiting structure 18. When the movable lens barrel 15 moves to the position of the limiting structure 18, the front end of the movable lens barrel 15 resists against the limiting structure 18, and at this time, there is still a distance between the projection lens module 100 and the distortion lens module 200, ensuring imaging.

In this embodiment, an engagement groove 19 that matches the fixed lens barrel 14 is provided inside the front end of the optical housing 50, and the fixed lens barrel 14 can be precisely positioned, engaged, and fixed within the engagement groove 19.

Furthermore, in this embodiment, a positioning post 20 is provided on the outer surface of the fixed lens barrel 14, and a corresponding positioning hole is provided on the front end of the optical housing 50. The positioning post 20 is configured to be inserted into the positioning hole.

Through the above-mentioned structures of the engagement groove 19, the positioning post 20, and the positioning hole, the fixed lens barrel 14 along with the distortion lens module 200 can be well fixed at the front end of the optical housing 50, preventing changes in the distortion effect caused by the movement of the distortion lens module 200.

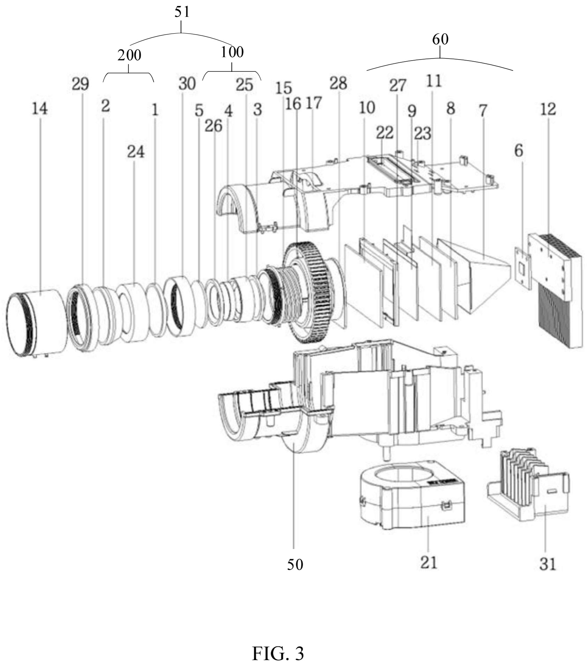

Further, as shown in FIG. 3, within the fixed lens barrel 14, the plano-convex lens 1 and the biconcave lens 2 are separated by a first spacer ring 24; within the movable lens barrel 15, the first convex lens 3 and the plano-concave lens are separated by a second spacer ring 25, while the plano-concave lens 4 and the second convex lens 5 are separated by a third spacer ring 26. The display screen 9 is fixed to the optical housing 50 via a screen frame 27, and the focusing wheel 16 is fixed to the optical housing 50 via a bracket 28. A locking cover 29 is provided at the front end of the fixed lens barrel 14, and a lens cap 30 is provided at the front end of the movable lens barrel 15. Additionally, a light shield 31 can be installed at a rear end of the optical housing 50 to reduce light leakage from the light source 6.

### Embodiment 3

The structure of this embodiment is substantially the same as that of Embodiment 2. In other words, the description provided for Embodiment 2 of the present invention can generally be applied to Embodiment 3. The following mainly describes the differences between Embodiment 3 and Embodiment 2.

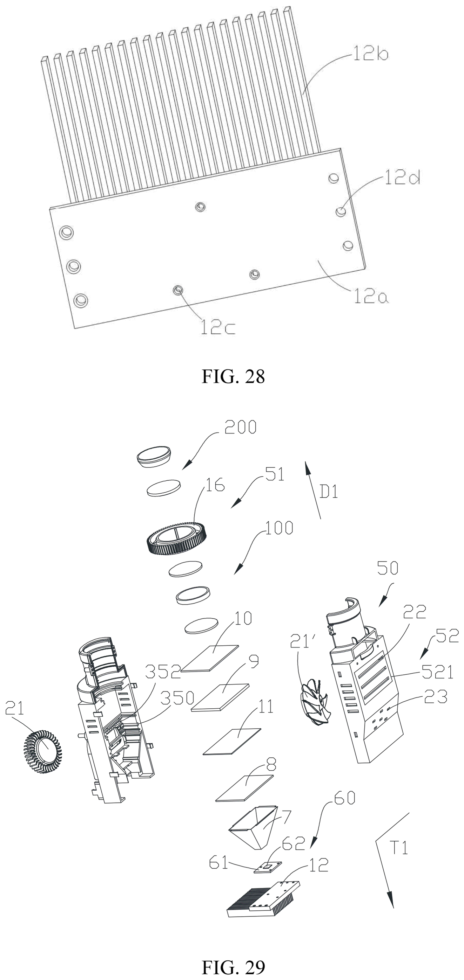

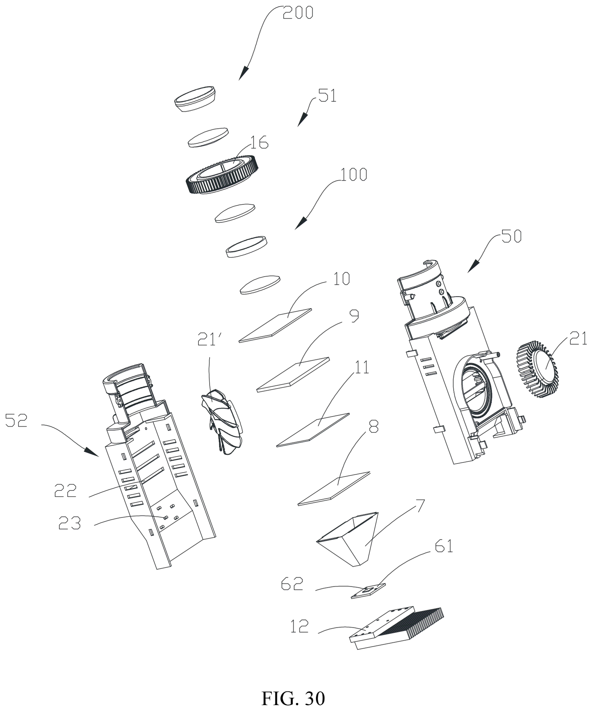

In the third embodiment, as shown in FIGS. 29 and 30, the optical structure may further include a second heat-dissipation fan 21'. The second heat-dissipation fan 21' can be installed at the least one air inlet 52. The second heat-dissipation fan 21' is used to blow air from the at least one air inlet 52 towards the light source assembly 60. It can be understood that the second heat-dissipation fan 21' can be located inside the optical housing 50 and can be an axial fan. It is configured to draw air from the at least one air inlet 52 at the top of the optical housing 50 into the optical housing 50, and then blow the air through the gaps between two adjacent components of the light source assembly 60 along the optical path direction D1 towards the first heat-dissipation fan 21. In this embodiment, the first heat-dissipation fan 21 and the second heat-dissipation fan 21' are respectively installed on opposite sides of the optical housing 50. Specifically, the second heat-dissipation fan 21' is adjacent to the air inlet 52 at the top of the optical housing 50, and the second heat-dissipation fan 21' is installed adjacent to the bottom of the optical housing 50 and directs the air from the light source assembly 60 above towards the rear end of the optical structure, thus forming a heat-dissipation path T1 from top to bottom and then to the rear side. It can be understood that using two heat-dissipation fans 21 and 21' to dissipate heat from the light source assembly can improve heat-dissipation efficiency and imaging effects, as well as extend the service life of the optical structure.

### Embodiment 4

The structure of this embodiment is basically the same as that of Embodiment 2. That is to say, the description of Embodiment 2 in the present invention can generally apply to Embodiment 4. The following mainly describes the differences between them.

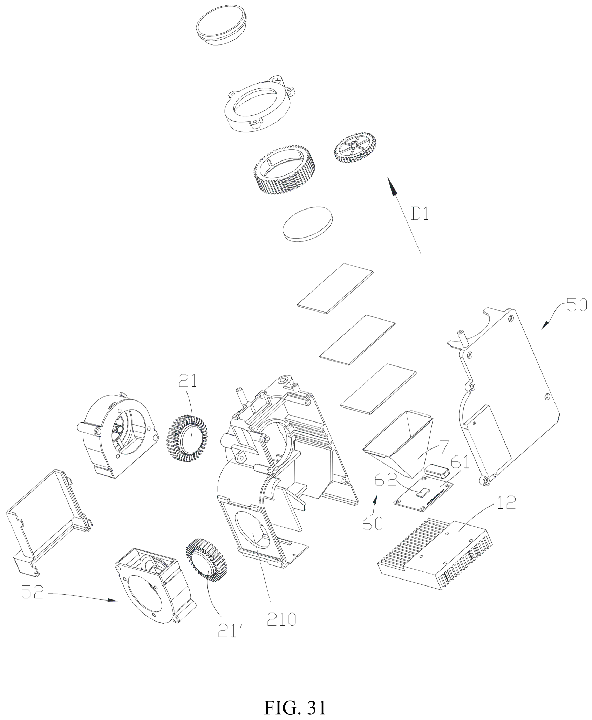

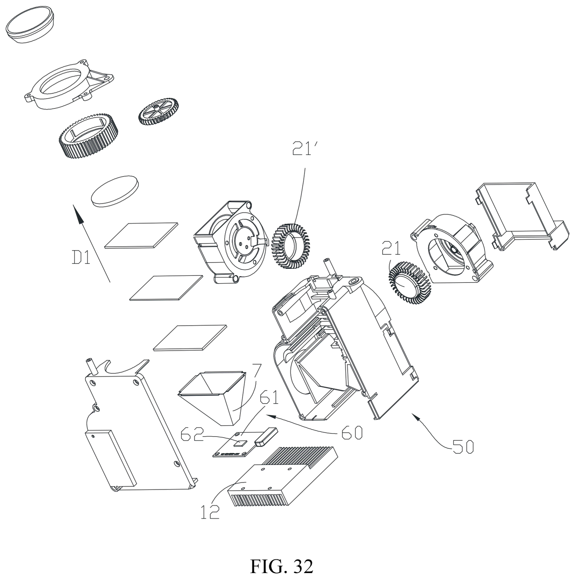

In the fourth embodiment, as shown in FIGS. 31 and 32, the optical structure may further include a second heat-dissipation fan 21'. The air inlet 52 of the optical structure is arranged on a side of the optical housing 50. An air duct 210 for accommodating the second heat-dissipation fan 21' is further formed inside the optical housing 50. The outlet of the air duct 210 faces the gaps between two adjacent components in the light source assembly 60, so that the second heat-dissipation fan 21' is used to blow air from the at least one air inlet 52 towards the light source assembly 60.

It can be understood that in this embodiment, the second heat-dissipation fan 21' can be a turbo fan. The axial direction of the second heat-dissipation fan 21' can be perpendicular to that of the first heat-dissipation fan 21. The second heat-dissipation fan 21' is used to draw air from at least one air inlet 52 on the side of the optical housing 50 into the optical housing 50, and then blow the air through the gaps between two adjacent components along the optical path direction D1 of the light source assembly 60 towards the first heat-dissipation fan 21.

In this embodiment, the first heat-dissipation fan 21 and the second heat-dissipation fan 21' are respectively installed on two adjacent sides of the optical housing 50. Specifically, the second heat-dissipation fan 21' is adjacent to the air inlet 52 on the side of the optical housing 50, and the first heat-dissipation fan 21 is installed adjacent to the bottom of the optical housing 50 and directs the air from the light source assembly 60 above towards the rear end of the optical structure, thus forming a heat-dissipation channel from the side to the bottom and then to the rear side. It can be understood that using two heat-dissipation fans 21 and 21' to dissipate heat from the light source assembly can improve heat-dissipation efficiency and imaging effects, as well as extend the service life of the optical structure.

### Embodiment 5

The structure of this embodiment is basically the same as that of Embodiment 2. That is to say, the description of Embodiment 2 in the present invention can generally apply to Embodiment 5. The following mainly describes the differences between the two embodiments.

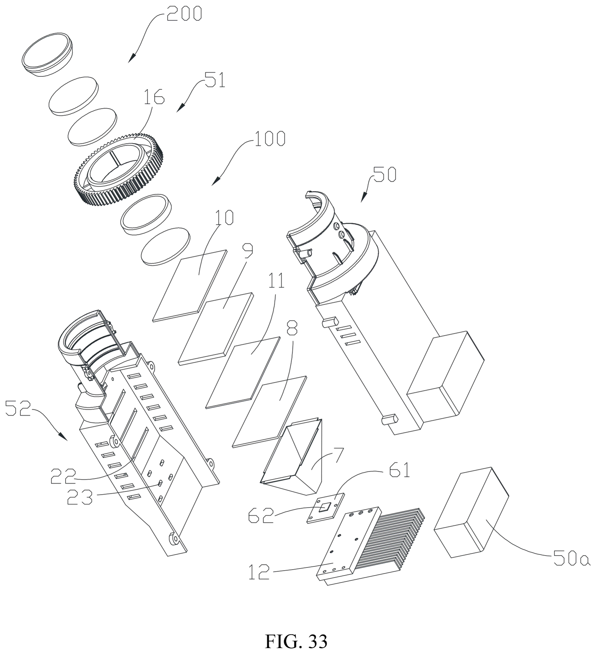

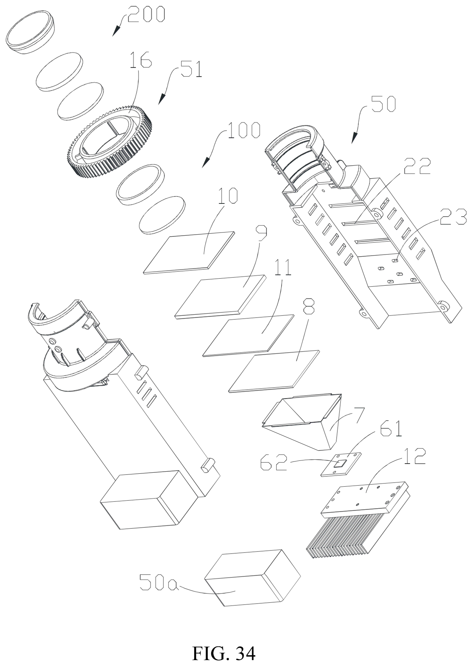

As shown in FIGS. 33 and 34, the optical structure in the fifth embodiment omits the heat dissipation fan compared to that in the second embodiment, eliminating the need for air vents on a bottom plate of a lower portion of the optical housing 50. Specifically, the lower portion of the optical housing 50 is integrally formed with a protruding heat-dissipation member accommodation section 50a, within which the heat-dissipation member 12 is installed. It is understandable that this arrangement can result in a lighter and smaller optical structure, facilitating portability.

### Embodiment 6

The structure of this embodiment is substantially the same as that of Embodiment 2. In other words, the description provided for Embodiment 2 of the present invention can generally be applied to Embodiment 6. The following mainly describes the differences between the two embodiments.

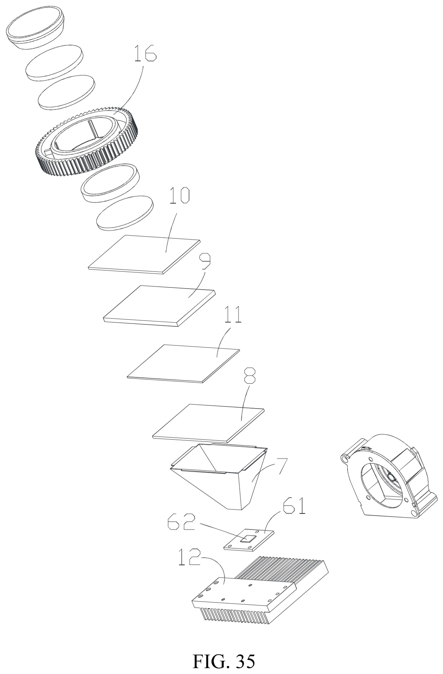

As shown in FIG. 35, the optical structure in the sixth embodiment omits the optical housing compared to that in the second embodiment. This means that the components inside the optical housing of second embodiment can be placed on a housing of a terminal product that uses the optical structure. In other words, the housing of the terminal product integrates the functions of the optical housing, achieving a compact and lightweight design for the terminal product.

### Embodiment 7

The structure of this embodiment is substantially the same as that of Embodiment 2. In other words, the description provided for Embodiment 2 of the present invention can generally be applied to Embodiment 7. The following mainly describes the differences between the two embodiments.

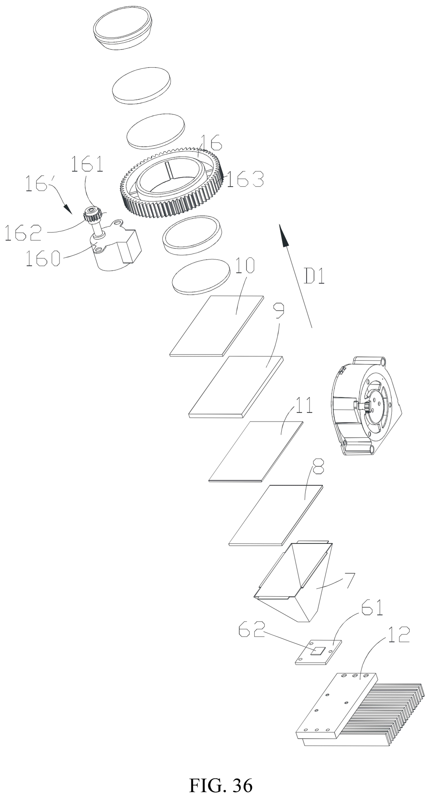

As shown in FIG. 36, the optical structure in Embodiment 7 includes an additional drive device 16' compared to that in Embodiment 2. The drive device 16' is configured to drive the at least one lens barrel to move back and forth along the optical path direction D1 for projection focal length adjustment. Specifically, the drive device 16' can drive the focusing wheel 16 to move the movable lens barrel 15 along the optical path direction D1.

The drive device 16' may include a motor 160. An axial direction of an output shaft 161 of the motor 160 may be the same as the optical path direction D1. The output shaft 161 is equipped with a first meshing structure 162, and the outer surface of the focusing wheel 16 is equipped with a second meshing structure 163. The first meshing structure 162 and the second meshing structure 163 mesh with each other, so that when the output shaft 161 of the motor 160 rotates, the first meshing structure 162 rotates, driving the second meshing structure 163 to rotate as well. Consequently, the focusing wheel 16 rotates and drives the movable lens barrel 15, which is threadedly connected to the focusing wheel 16, to move along the optical path direction D1 for focusing.

### Embodiment 8

The structure of this embodiment is substantially the same as that of Embodiment 2. In other words, the description provided for Embodiment 2 of the present invention can generally be applied to Embodiment 8. The following mainly describes the differences between the two embodiments.

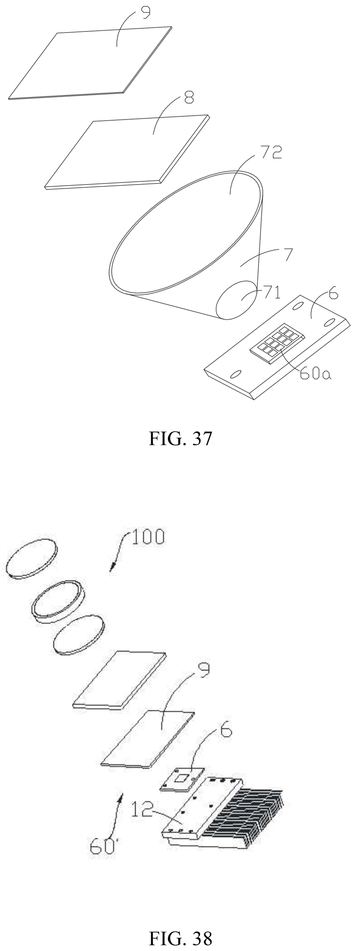

In this embodiment, as shown in FIG. 37, the light inlet 71, the light outlet 72, and the cross-section of the light-converging member 7 are all circular. The light-emitting area 60a of the light source 6 can be circular and sized to match the light inlet 71.

Correspondingly, the first lens 222 (or the second lens 223) at the light outlet 72 and the display screen 9 can be circular, allowing for shape compatibility among the components to achieve high light utilization efficiency and compact structural design. However, it is understandable that in some modified embodiments, the shapes of the cross-section of the light-converging member 7, the light-emitting area 60a of the light source 6, the first lens 222 (or the second lens 223) at the light outlet 72, and the display screen 9 may vary. Slightly lower light utilization efficiency or slightly larger product dimensions due to shape incompatibility will not affect the basic projection and imaging performance of the optical structure.

### Embodiment 9

The structure of Embodiment 9 is substantially the same as that of Embodiment 2. In other words, the description provided for Embodiment 2 of the present invention can generally be applied to Embodiment 9. The following mainly describes the differences between the two embodiments.

As shown in FIG. 38, the light source assembly 60' of the optical structure in Embodiment 9 omits the light-converging member, the first lens, and the second lens compared to that in Embodiment 2. This means that the light emitted from the light source 6 can be directly projected onto the display screen 9, which then projects the image through the projection lens module 100.

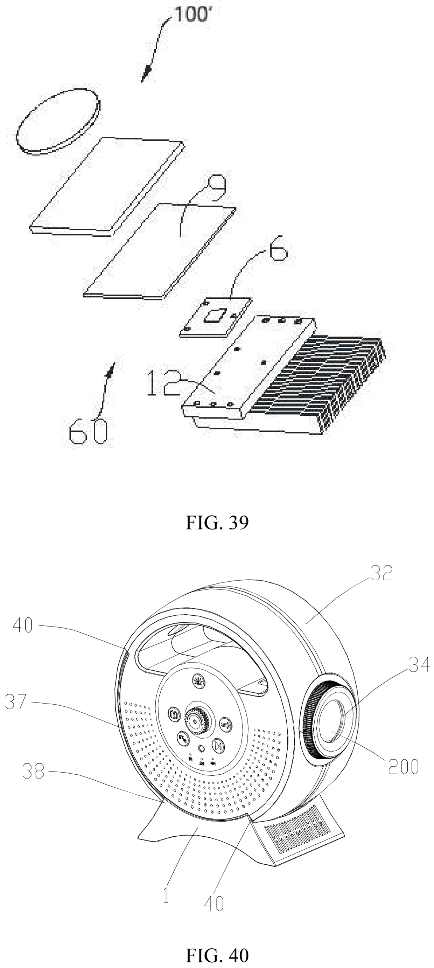

Additionally, in some modified embodiments, as shown in FIG. 39, the number of lenses in the projection lens module 100' can be reduced to just one convex lens, as long as it can fulfill the projection function.

Omitting the light-converging member, the first lens, the second lens, and some lenses in the projection lens module 100 can reduce the product weight, facilitating portability.

Furthermore, in the embodiments shown in FIGS. 38 and 39, the light emitted from the light source 6 can be controlled within a preset angle, ensuring that substantially all of the light emitted from the light source 6 is provided to the display screen 9 after passing through a preset transmission space, thereby guaranteeing the light utilization efficiency of the light source assembly 60'.

### Embodiment 10

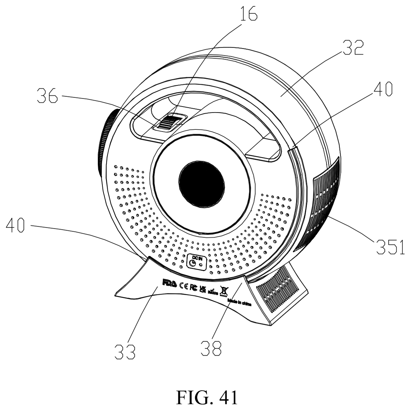

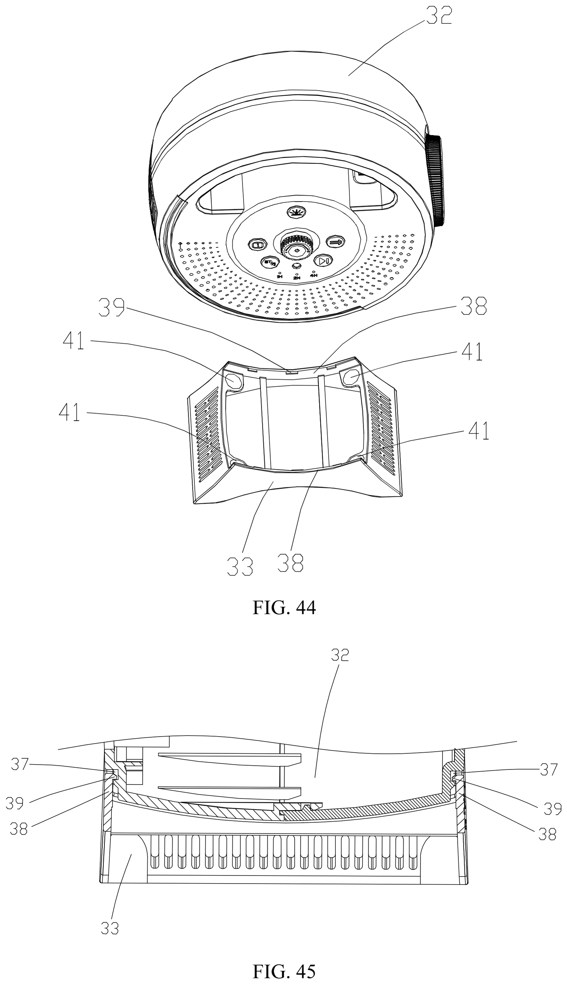

As shown in FIGS. 40 to 48, an ambient lamp provided in the tenth embodiment of the present invention includes an outer housing and the optical structure any one of Embodiments 2 to 9, the optical structure is arranged in the outer housing.

Specifically, the outer housing may include a main housing 32 and a base 33. The main housing 32 is movably mounted on the base 33 to facilitate adjustment of the projection angle of the optical structure. The optical housing 50 can be placed inside the main housing 32, which is equipped with a projection aperture 34 corresponding to the distorted lens assembly 200.

Specifically, the front end of the optical housing 50 can be inserted into the projection aperture 34, while the rear end of the optical housing 50 is placed into a first receiving groove 35 on the inner wall of the main housing 32, enabling simple and convenient assembly of the optical structure. Additionally, the main housing 32 is equipped with a focusing aperture 36 through which the focusing wheel 16 protrudes, facilitating easy operation.

The main housing 32 can be assembled by joining a left housing 323 and a right housing 322. A front cover 323 with the projection aperture 34 is provided at the front end, while a rear cover 324 is provided at the rear end. The rear cover 324 is integrated with the main housing 32, and the first receiving groove 35 is arranged on the rear cover 324 for securing rear-end components (such as the heat-dissipation member 12) of the optical structure. Multiple heat dissipation holes 351 are provided on the bottom plate of the first receiving groove 35 for heat-dissipation member 12 heat dissipation.

Furthermore, the sides of the main housing 32 are provided with first sliding structures (e.g., sliding grooves 37). Correspondingly, sidewalls 38 extend from both sides of the base 33, with second sliding structures (e.g., sliding blocks 39) extending inwardly from the sidewalls 38. The first and second sliding structures cooperate (e.g., sliding blocks 39 are inserted into sliding grooves 37), enabling the main housing 32 to slide relative to the base 33 and adjust the position of the preset atmospheric imaging scene of the optical structure.

During use, the main housing 32 slides relative to the base 33 via the cooperation of the sliding grooves 37 and sliding blocks 39. This sliding structure ensures a stable and reliable relative movement between the main housing 32 and the base 33. Additionally, the main housing 32 is directly connected to the base 33 without the need for additional connectors, simplifying the structure, reducing the risk of structural failures, and lowering production costs.

Furthermore, the main housing 32 is circular, with the first sliding structures (e.g., sliding grooves 37) arranged along the edges of the top and bottom surfaces, forming an arc-shaped structure (e.g., arc-shaped sliding grooves). Correspondingly, the second sliding structures include arc-shaped sliding blocks 39 on the sidewalls 38 of the base 33. Multiple sliding blocks 39 can be provided on each sidewall 38. During use, the main housing 32 can rotate relative to the base 33, which is more convenient in operation. Additionally, stoppers 40 are provided at both ends of the sliding grooves 37 to limit the rotation travel of the main housing 32.

Furthermore, the base 33 is equipped with damping pads 41 that conform to the bottom of the main housing. Multiple damping pads can be provided. The damping pads 41 enhance the adhesion between the main housing 32 and the base 33. When the main housing 32 rotates, the damping pads 41 provide flexible friction, ensuring a smooth rotation without noticeable friction sounds and providing a comfortable user experience. Additionally, they prevent wear and tear on components due to rigid contact between the main housing 32 and the base 33, extending the lifespan of the optical structure. Combined with the aforementioned structure, the weight of the main housing 32 ensures continuous contact with the damping pads 41, preventing loss of function of the damping pads due to wear. Moreover, when the built-in speaker of the optical structure operates, the damping pads 41 absorb vibrations, ensuring stable projection without shaking or movement, effectively enhancing the user experience. They also reduce the risk of product resonance, preventing abnormal noises or structural fatigue caused by resonance.

Of course, the relative movement structure between the main housing 32 and the base 33 can take various forms (e.g., rotation, detachable connections, or other movable connection structures). However, the aforementioned structures are provided only as examples, and other structural forms are not listed here one by one.

Furthermore, the bottom of the base 33 is provided with foot pads 42. Four foot pads can be provided, which is merely an example and not a limitation on the specific quantity. The foot pads 42 provide stable placement and anti-slip functionality for the optical structure, reducing vibrations transmitted to the surface when the built-in speaker operates. They also prevent scratches and damage during placement and compensate for uneven placement surfaces.

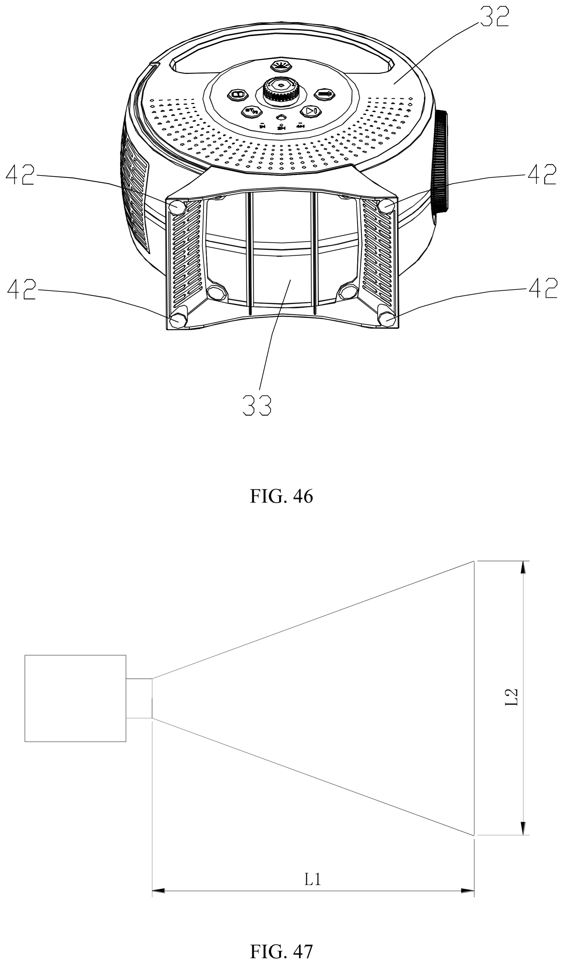

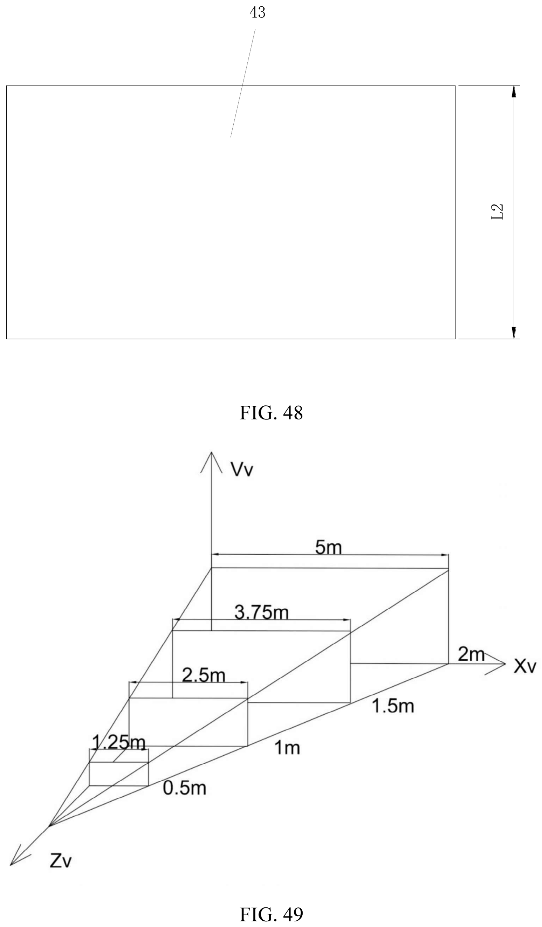

Furthermore, as shown in FIGS. 47 and 48, the projection ratio of the optical structure can be less than or equal to 0.9. The projection ratio refers to the ratio of the projection distance L1 to the width L2 of the projected image, where L2 represents the width of the projected image 43. Thus, the projection ratio is calculated as L1/L2. Additionally, due to variations in the thickness and concave-convex shapes of the lenses, their curvatures differ, resulting in varying refractive indices for light. In the optical structure of the present invention, the projection lens module 100 includes the first convex lens 221a, the plano-concave lens 221b', and the second convex lens 221c. The aforementioned projection ratio is achieved through the mutual cooperation among the first convex lens 221a, the plano-concave lens 221b', and the second convex lens 221c, or through the combination of the projection lens module 100 and the distorted lens group 200. Furthermore, the projection focal length can be adjusted by modifying the curvatures of these lenses, thereby adjusting the projection ratio. Specifically, the projection ratio of the optical structure can be adjusted to be less than or equal to 0.9 to achieve desired technical effects of the present invention.

As shown in FIG. 49, in one embodiment, the projection ratio can be less than or equal to 0.4. Specifically, when the projection distance is 0.5m, the width of the projected image is equal to 1.25m; when the projection distance is 1m, the width of the projected image is greater than or equal to 2.5m; when the projection distance is 1.5m, the width of the projected image is greater than or equal to 3.75m; and when the projection distance is 2m, the width of the projected image is greater than or equal to 5m. For an optical structure equipped with a distorted lens group 200, maintaining a projection ratio around 0.4 can achieve optimal technical effects.

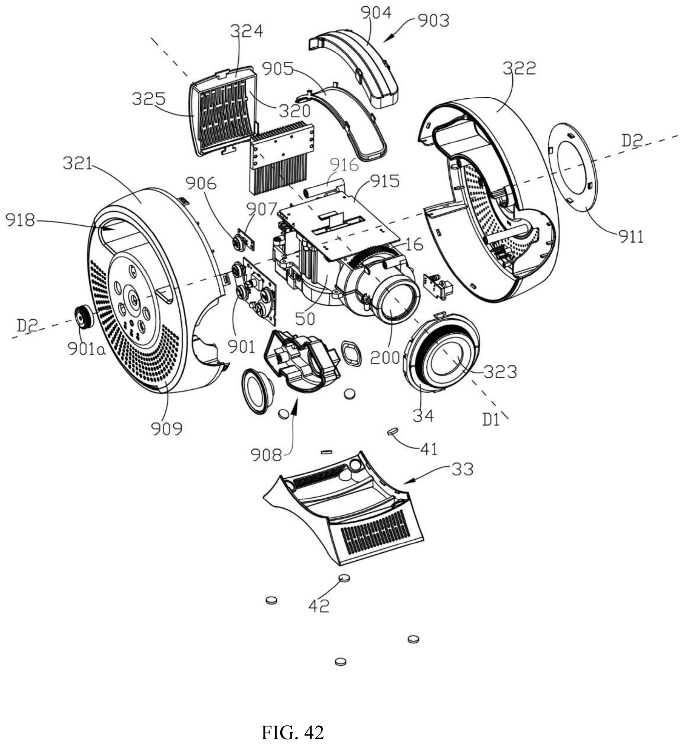

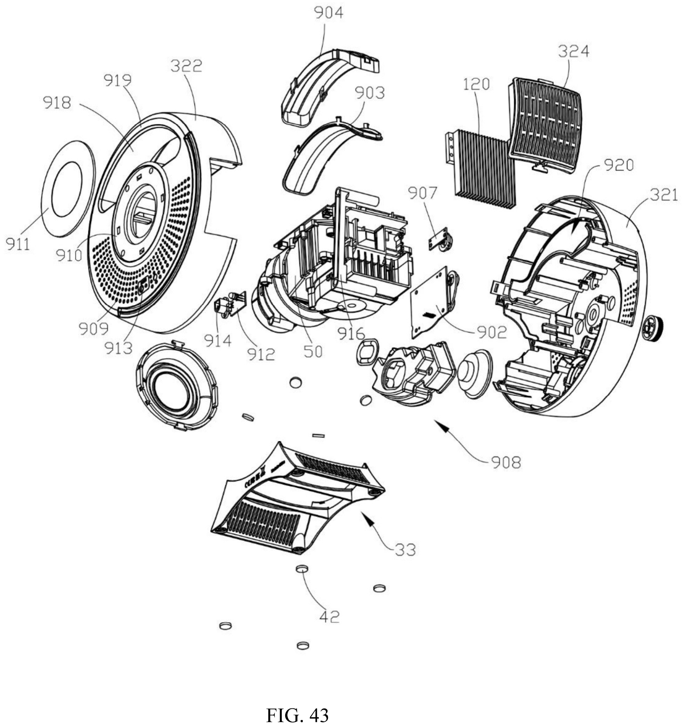

Furthermore, as shown in FIGS. 42 and 43, the left housing 323 and the right housing 322 are arranged and snap-fitted together along the direction D2, which is perpendicular to the optical axis direction D1. In this embodiment, the main housing 32 can be cylindrical, with its central axis aligned along direction D2. Through the first and second sliding structures, the main housing 32 can slide relative to the base 33 around direction D2 to adjust the optical axis direction D1, thereby adjusting the projection angle.

A plurality of control buttons 901 are arranged on one side of the main housing 32. The optical structure further includes a button circuit board 902, which is positioned between the optical housing 50 and the multiple control buttons 901. The plane of the button circuit board 902 can be perpendicular to the direction D2. The plurality of control buttons 901 include functions such as forward, backward, pause, play (e.g., single-loop, sequential-loop), and volume adjustment, enabling control over the playback and volume of the atmospheric projection images. Among the plurality of control buttons 901, there is a stepless adjustment knob 901a, which can be arranged at the center of one side of the main housing 32 for both aesthetic and ease of operation.

In this embodiment, the optical structure further includes a night light module 903, which is positioned on the side of the main housing 32 away from the base 33. The night light module 903 comprises a night light box 904, a night light cover 905, a night light control button 906, and a night light control board 907. The night light control button 906 and the night light control board 907 are correspondingly arranged. The night light control button 906 is installed on one side of the main housing 32 and can be located on the same side as the plurality of control buttons 901, with the night light control button 906 positioned above the multiple control buttons 901. The night light control board 907 is located above the button circuit board 902. The night light box 904 is electrically connected to the night light control board 907 and contains a light-emitting element. When the user operates the night light control button 906, it triggers the night light control board 907 to generate a control signal, which is used to control activation, deactivation, and/or light adjustment of the night light box 904.

The optical structure further includes a speaker module 908 arranged in the lower area of the inner cavity of the main housing 32, such as below the button circuit board 902, and is positioned adjacent to the base 33. Multiple through-holes 909 are provided on the lower sides of both sides of the main housing 32. These through-holes 909 can be configured for heat dissipation and sound transmission. At the center of the outer surface on the side of the main housing 32 away from the plurality of control buttons 901, there is a recess 910, onto which a decorative cover 911 is snap-fitted.

The optical structure further includes an interface circuit board 912. An opening 913 is provided on the side of the main housing 32 away from the plurality of control buttons 901. The interface connectors 914 on the interface circuit board 912 are exposed through the opening 913 to connect with external devices for charging and/or data exchange. The opening 913 can be positioned beneath the decorative cover 911.

The optical structure further includes a main circuit board 915, which can be arranged above the optical housing 50 and corresponds to the air inlet 52. This arrangement not only makes the internal structure more compact but also allows some of the heat generated by the main circuit board 915 to be dissipated through the air inlet 52. The main circuit board 915 is electrically connected to the night light control board 907, the button circuit board 902, the interface circuit board 912, the light source assembly 60 (including the light source 11 and the display screen 9), and the first heat-dissipation fan 21. A controller on the main circuit board 915 is used to control the night light control board 907, the button circuit board 902, the interface circuit board 912, the light source assembly 60, and the first heat-dissipation fan 21.

A mounting bracket 916 can be provided inside the main housing 32. The mounting bracket 916 is configured to secure the optical housing 52 to the inner side of the main housing 32. The mounting bracket 916 may include a U-shaped structure that clamps onto at least three sides of the optical housing 52. This mounting bracket 916 not only has a simple structure but also provides a good fixing effect, improving the stability of the ambient lamp.

Furthermore, there is a through opening area 918 on the top of the main housing 32, forming a handle structure 919 above the opening area 918. The night light box 904 is arranged inside the handle structure 919. The handle structure 919 further includes a mounting opening 920 adjacent to the opening area 918, onto which the night light cover 905 is installed. The night light box 904 emits light towards the opening area 918 through the night light cover 905. This lighting design achieves a concealed lighting effect, preventing excessively high light intensity from affecting the projection quality.

Furthermore, in this embodiment, the focusing hole 36 corresponds to the opening area 918, allowing the focusing wheel 16 to protrude through the main housing 32 at the opening area 918. It can be understood that this design positions the focusing wheel 16 in a relatively concealed location, making it less prone to accidental touch and enhancing the user experience.

The above-described embodiments merely illustrate several embodiments of the present invention, and the description thereof is relatively specific and detailed, but it should not be construed as limiting the scope of patent protection. It should be pointed out that, for ordinary skilled in the art, several modifications and improvements can be made without departing from the concept of the present invention, which all fall within the scope of protection of the present invention. Therefore, the protection scope of the present invention should be determined by appended claims.

## Claims

1. An optical structure of an ambient lamp, comprising an optical housing (50) having at least one air inlet (52); the optical structure is **characterized by**:
the optical structure further comprising:
a light source assembly (60), arranged in the optical housing (50) and comprising a light source (6) and a display screen (9) arranged along an optical path direction (D1);
a lens assembly (51), arranged on a side of the display screen (9) opposite to the light source (6) and configured to project light out from the light source assembly (60) onto a carrier to form a projected image; and
a first heat-dissipation fan (21), arranged a side of the light source assembly (60) opposite to the at least one air inlet (52) and configured to allow air from the at least one air inlet (52) to be provided to the first heat-dissipation fan (21) through the light source assembly (60) to take away heat from the light source assembly (60).

2. The optical structure according to claim 1, wherein the light source assembly (60) further comprises a first lens (8) and a second lens (9), the light source (6), the first lens (8), the display screen (9), and the second lens (9) are arranged along the optical path direction (D1); the air from the at least one air inlet (52) passes through gaps between at least two components of the light source assembly (60) to take away heat from the light source assembly (60).

3. The optical structure according to claim 2, wherein a heat-insulating glass (11) is arranged between the first lens (8) and the display screen (9).

4. The optical structure according to claim 2, wherein the optical housing (50) has a plurality of mounting slot (350) configured to receive the first lens (8), the display screen (9) and the second lens (9) respectively.

5. The optical structure according to claim 4, wherein part of the plurality of mounting slot (350) adjacent to the first heat-dissipation fan (21) is provided with dust-proof oil (352).

6. The optical structure according to claim 1, wherein a heat-dissipation member (12) is arranged on a side of the light source (6) opposite to the display screen (9); the first heat-dissipation fan (21) is further configured to blow air towards the heat-dissipation member (12) to take away heat from heat-dissipation member (12).

7. The optical structure according to claim 6, wherein the heat-dissipation member (12) comprises a heat dissipation substrate (12a) that fixes the light source (6) and multiple cooling fins (12b) connected to a side of the heat dissipation substrate (12a) opposite to the light source (6), the multiple cooling fins (12b) are spaced apart and extend to an air outlet of the first heat-dissipation fan (21), allowing the first heat-dissipation fan (21) to blow air into gaps among the multiple cooling fins (12b) to carry away the heat from the heat-dissipation member (12).

8. The optical structure according to claim 7, wherein the first heat-dissipation fan (21) comprises a fan housing (212) with an installation cavity (211) and fan blades (213) arranged in the installation cavity (211), the fan housing (212) further has a fan air inlet (212a) facing the light source assembly (60) and a fan air outlet (212b) facing the heat-dissipation member (12).

9. The optical structure according to claim 8, wherein multiple air guide vanes (214) are arranged at the at least one air inlet (52); the fan housing (212) is snap-fitted onto the optical housing (50).

10. The optical structure according to claim 9, further comprising a second heat-dissipation fan (21') arranged at the at least one air inlet (52) and configured to blow air from the at least one air inlet (52) towards the light source assembly (60); and the first heat-dissipation fan (21) and the second heat-dissipation fan (21') are arranged on two opposite sides of the optical housing (50).

11. The optical structure according to claim 10, wherein the light source assembly (60) further comprises a light-converging cup (7) arranged on a side of the light source (6) opposite to the display screen (9), the light-converging cup (7) is conical with a gradually increasing diameter along the optical path direction (D1), a shape of a part of the optical housing (50) where the light-converging cup (7) is arranged is adapted to the light-converging cup (7); the display screen (9) is substantially rectangular, and a cross-section of the light-converging cup (7) perpendicular to the optical path direction (D1) is rectangular.

12. The optical structure according to claim 11, wherein
the lens assembly (51) comprises a projection lens module (100) arranged on a light-emitting side of the light source assembly (60) and a distortion lens module (200) arranged on a side of the projection lens assembly (51) opposite to the light source assembly (60);
the optical housing (50) further comprising a first section (541), a second section (542), and a third section (543) connected sequentially along the optical path direction (D1), a diameter of the first section (541) gradually decreases along the optical path direction (D1), a diameter of the second section (542) is larger than that of the first section (541) and the third section (543) and the second section (542) has focusing wheel protrusion holes (17) configured to expose part of a focusing wheel (16), the projection lens module (100) is positioned on the focusing wheel (16), and alignment and mating structures are arranged to facilitate assembly of the distortion lens module and the optical housing (50).

13. The optical structure according to claim 12, wherein
at least one lens barrel is arranged at a front end of the optical housing (50) and includes a fixed lens barrel (14) and a movable lens barrel (15), the projection lens module (100) is arranged in the moveable lens barrel (15) and is configured to move back and forth relative to the distortion lens module (200);
an outer surface of the moveable lens barrel (15) is provided with external threads, the focusing wheel (16) is provided with internal threads configured to be engaged with the external threads to enable the moveable lens barrel (15) to be driven by rotation of the focusing wheel (16) to bring the projection lens module (100) to move in the optical path direction (D1) for focusing;
the part of the focusing wheel (16) protrudes out of the optical housing (50) through the focusing wheel protrusion holes (17) to allow a user to operate the focusing wheel (16) for focusing;
a limiting structure (18) is arranged at a front end of the focusing wheel (16) and configured to resist with a front end of the movable lens barrel (15) to prevent further movement of the moveable lens barrel (15) when the moveable lens (15) moves to the limiting structure (18), at this time, a distance remains between the projection lens module and the distortion lens module;
an engagement groove (19) is defined on an inner side of a front end of the optical housing (50) and configured to allow the fixed lens barrel (14) to be engaged therein; and
a first positioning structure is formed on an outer surface of the fixed lens barrel (14), a second positioning structure formed at a front end of the optical housing (50) corresponding to the first positioning structure, one of the first positioning structure and the second positioning structure is a positioning hole, and another one of the first positioning structure and the second positioning structure is a positioning post configured to be inserted in the positioning hole.

14. An ambient lamp, comprising the optical structure of claims 1-13, a main housing (32), and a base (33), wherein the main housing (32) is moveably arranged on the base (33), the optical structure is arranged in the main housing (32), the main housing (32) defines a projection aperture (34) configured to expose the lens assembly (51); the main housing further defines a focusing aperture (36) configured to allow a focusing wheel to protrudes out of the main housing therethrough.

15. The ambient lamp according to claim 14, wherein
two opposite sides of the main housing (32) are provided with first sliding structures; sidewalls (38) extend from both sides of the base (33) respectively and an inner side of the sidewalls (38) is provided with second sliding structures, cooperation of the first sliding structures and the second sliding structures enables the main housing (32) to bring the optical structure to slide relative to the base (33) so as to adjust a position of a preset ambient imaging scene of the optical structure; and
the main housing (32) is circular, the first sliding structures are arranged along edges of top and bottom surfaces of the main housing to form arc-shaped sliding grooves (37); the second sliding structures comprise arc-shaped sliding blocks (39) arranged on the sidewalls (38) of the base (33); and the base (33) is provided with damping pads (41) attached to a bottom of the main housing (32).

## Amended claims

### Amended claims in accordance with Rule 137(2) EPC.

1. An optical structure of an ambient lamp, comprising an optical housing (50) having at least one air inlet (52); the optical structure is **characterized by**:
the optical structure further comprising:
a light source assembly (60), arranged in the optical housing (50) and comprising a light source (6) and a display screen (9) arranged along an optical path direction (D1);
a lens assembly (51), arranged on a side of the display screen (9) opposite to the light source (6) and configured to project light out from the light source assembly (60) onto a carrier to form a projected image; and
a first heat-dissipation fan (21), arranged a side of the light source assembly (60) opposite to the at least one air inlet (52) and configured to allow air from the at least one air inlet (52) to be provided to the first heat-dissipation fan (21) through the light source assembly (60) to take away heat from the light source assembly (60);
wherein the first heat-dissipation fan (21) comprises a fan housing (212) with an installation cavity (211) and fan blades (213) arranged in the installation cavity (211), the fan housing (212) further has a fan air inlet (212a) facing the light source assembly (60) and a fan air outlet (212b) facing the heat-dissipation member (12); and multiple air guide vanes (214) are arranged at the fan air outlet (212b).

2. The optical structure according to claim 1, wherein the light source assembly (60) further comprises a first lens (8) and a second lens (10), the light source (6), the first lens (8), the display screen (9), and the second lens (10) are arranged along the optical path direction (D1); the air from the at least one air inlet (52) passes through gaps between at least two components of the light source assembly (60) to take away heat from the light source assembly (60).

3. The optical structure according to claim 2, wherein a heat-insulating glass (11) is arranged between the first lens (8) and the display screen (9).

4. The optical structure according to claim 2, wherein the optical housing (50) has a plurality of mounting slot (350) configured to receive the first lens (8), the display screen (9) and the second lens (10) respectively.

5. The optical structure according to claim 4, wherein part of the plurality of mounting slot (350) adjacent to the first heat-dissipation fan (21) is provided with dust-proof oil (352).

6. The optical structure according to claim 1, wherein a heat-dissipation member (12) is arranged on a side of the light source (6) opposite to the display screen (9); the first heat-dissipation fan (21) is further configured to blow air towards the heat-dissipation member (12) to take away heat from heat-dissipation member (12).

7. The optical structure according to claim 6, wherein the heat-dissipation member (12) comprises a heat dissipation substrate (12a) that fixes the light source (6) and multiple cooling fins (12b) connected to a side of the heat dissipation substrate (12a) opposite to the light source (6), the multiple cooling fins (12b) are spaced apart and extend to an air outlet of the first heat-dissipation fan (21), allowing the first heat-dissipation fan (21) to blow air into gaps among the multiple cooling fins (12b) to carry away the heat from the heat-dissipation member (12).

8. The optical structure according to claim 1, wherein the fan housing (212) is snap-fitted onto the optical housing (50).

9. The optical structure according to claim 1, further comprising a second heat-dissipation fan (21') arranged at the at least one air inlet (52) and configured to blow air from the at least one air inlet (52) towards the light source assembly (60); and the first heat-dissipation fan (21) and the second heat-dissipation fan (21') are arranged on two opposite sides of the optical housing (50).

10. The optical structure according to claim 1, wherein the light source assembly (60) further comprises a light-converging cup (7) arranged between the light source (6) and the display screen (9), the light-converging cup (7) is conical with a gradually increasing diameter along the optical path direction (D1), a shape of a part of the optical housing (50) where the light-converging cup (7) is arranged is adapted to the light-converging cup (7); the display screen (9) is substantially rectangular, and a cross-section of the light-converging cup (7) perpendicular to the optical path direction (D1) is rectangular.

11. The optical structure according to 1, wherein
the lens assembly (51) comprises a projection lens module (100) arranged on a light-emitting side of the light source assembly (60) and a distortion lens module (200) arranged on a side of the projection lens assembly (51) opposite to the light source assembly (60);
the optical housing (50) further comprising a first section (541), a second section (542), and a third section (543) connected sequentially along the optical path direction (D1), a diameter of the first section (541) gradually decreases along the optical path direction (D1), a diameter of the second section (542) is larger than that of the first section (541) and the third section (543) and the second section (542) has focusing wheel protrusion holes (17) configured to expose part of a focusing wheel (16), the projection lens module (100) is positioned on the focusing wheel (16), and alignment and mating structures are arranged to facilitate assembly of the distortion lens module and the optical housing (50).

12. The optical structure according to 1, wherein
at least one lens barrel is arranged at a front end of the optical housing (50) and includes a fixed lens barrel (14) and a movable lens barrel (15), the projection lens module (100) is arranged in the moveable lens barrel (15) and is configured to move back and forth relative to the distortion lens module (200);
an outer surface of the moveable lens barrel (15) is provided with external threads, the focusing wheel (16) is provided with internal threads configured to be engaged with the external threads to enable the moveable lens barrel (15) to be driven by rotation of the focusing wheel (16) to bring the projection lens module (100) to move in the optical path direction (D1) for focusing;
the part of the focusing wheel (16) protrudes out of the optical housing (50) through the focusing wheel protrusion holes (17) to allow a user to operate the focusing wheel (16) for focusing;
a limiting structure (18) is arranged at a front end of the focusing wheel (16) and configured to resist with a front end of the movable lens barrel (15) to prevent further movement of the moveable lens barrel (15) when the moveable lens (15) moves to the limiting structure (18), at this time, a distance remains between the projection lens module and the distortion lens module;
an engagement groove (19) is defined on an inner side of a front end of the optical housing (50) and configured to allow the fixed lens barrel (14) to be engaged therein; and
a first positioning structure is formed on an outer surface of the fixed lens barrel (14), a second positioning structure formed at a front end of the optical housing (50) corresponding to the first positioning structure, one of the first positioning structure and the second positioning structure is a positioning hole, and another one of the first positioning structure and the second positioning structure is a positioning post configured to be inserted in the positioning hole.

13. An ambient lamp, comprising the optical structure of any one of claims 1-12, a main housing (32), and a base (33), wherein the main housing (32) is moveably arranged on the base (33), the optical structure is arranged in the main housing (32), the main housing (32) defines a projection aperture (34) configured to expose the lens assembly (51); the main housing further defines a focusing aperture (36) configured to allow a focusing wheel to protrudes out of the main housing therethrough.

14. The ambient lamp according to claim 13, wherein
two opposite sides of the main housing (32) are provided with first sliding structures; sidewalls (38) extend from both sides of the base (33) respectively and an inner side of the sidewalls (38) is provided with second sliding structures, cooperation of the first sliding structures and the second sliding structures enables the main housing (32) to bring the optical structure to slide relative to the base (33) so as to adjust a position of a preset ambient imaging scene of the optical structure; and
the main housing (32) is circular, the first sliding structures are arranged along edges of top and bottom surfaces of the main housing to form arc-shaped sliding grooves (37); the second sliding structures comprise arc-shaped sliding blocks (39) arranged on the sidewalls (38) of the base (33); and the base (33) is provided with damping pads (41) attached to a bottom of the main housing (32).

15. The ambient lamp according to claim 13, wherein a top of the main housing (32a) defines a through opening area (918) to form a handle structure (919) above the opening area (918); and
a night light box (904) is arranged inside the handle structure (919) and is configured to emit light towards the opening area (918).
